Europäisches Patentamt

European Patent Office

Office européen des brevets

(11) Veröffentlichungsnummer : **0 097 735**
**B1**

(12) # EUROPÄISCHE PATENTSCHRIFT

(45) Veröffentlichungstag der Patentschrift :
**04.03.87**

(51) Int. Cl.⁴ : **A 01 G   9/10, A 01 C   1/04**

(21) Anmeldenummer : **82105818.7**

(22) Anmeldetag : **30.06.82**

(54) Verfahren zur Anzucht und zum Aussetzen von Pflanzen oder Keimlingen.

(43) Veröffentlichungstag der Anmeldung :
**11.01.84 Patentblatt 84/02**

(45) Bekanntmachung des Hinweises auf die Patenterteilung : **04.03.87 Patentblatt 87/10**

(84) Benannte Vertragsstaaten :
**AT BE CH FR GB IT LI NL SE**

(56) Entgegenhaltungen :
**DE-A- 1 582 055**
**DE-C- 1 136 150**
**GB-A-   927 792**
**US-A- 4 130 072**

(73) Patentinhaber : **Kaiser, Christian, Dr.agr.**
**Domäne Kinzigheimer Hof**
**D-6450 Hanau (DE)**

**Scheffer, Konrad, Prof. Dr. Dipl. agr.**
**Grosser Bruch 15**
**D-3403 Friedland 1 (DE)**

(72) Erfinder : **Scheffer, Konrad, Prof.Dr.Dipl.agr.**
**Grosser Bruch 15**
**D-3403 Friedland 1 (DE)**
Erfinder : **Kaiser Christian Dr. agr.**
**Kinzigheimer Hof**
**6454 Bruchköbel (DE)**

(74) Vertreter : **Jochem, Bernd, Dipl.-Wirtsch.-Ing.**
**Patentanwälte Beyer & Jochem Postfach 17 01 45**
**D-6000 Frankfurt/Main (DE)**

**Beschreibung**

Die Erfindung betrifft ein Verfahren zur Anzucht und zum Aussetzen von Pflanzen oder Keimlingen, wobei aus Erde oder einem Wachstum ermöglichenden Substrat Pflanzstumpen mit darin eingebetteten Samenkörnern hergestellt, aufgereiht, zu Paketen oder Gruppen zusammengefaßt im Treib- oder Gewächshaus vorgetrieben und anschließend einzeln ausgepflanzt werden.

Aus der DE-C-1 136 150 sind Pflanzstumpen bekannt, die aus einem faserigen Substrat und einer für Pflanzenwurzeln durchlässigen Hülle, z. B. aus Mull oder Tüll bestehen. In die vorgefertigten Pflanzstumpen werden Samenkörner eingelegt. Dann wird eine Vielzahl solcher Pflanzstumpen mittels einer äußeren Binde zu einem Paket oder Bündel zusammengefaßt. Nach der Anzucht wird vor dem Auspflanzen die äußere Binde gelöst. Nachteilig ist, daß sich während der Anzucht im Bündel die Wurzeln der jungen Pflanzen verfilzen können, so daß sich diese zum Auspflanzen, insbesondere wenn es maschinell erfolgt, nicht mehr oder nur mit Schwierigkeiten vereinzeln lassen.

Derselbe Nachteil besteht bei dem in der US-A-4 130 072 beschriebenen Verfahren mit aus einem selbsttragenden Substrat ohne äußere Hülle geformten Pflanzstumpen, die durch ein beim Formvorgang eingeschlossenes Band innerhalb einer Reihe auf Abstand gehalten werden. Da beim Vortreiben im Paket die Pflanzstumpen unmittelbar aneinander anliegen, kommt es wiederum zur Verfilzung der Pflanzenwurzeln.

Verwendet man jedoch gemäß DE-A-1 582 055 als Hülle für die Pflanzstumpen ein für die Wurzeln undurchdringliches Material, werden Pflanzen, wie z. B. Mais, die schon während des Vortreibens starke seitliche Wurzeln entwickeln, in ihrem Wachstum behindert.

Der Erfindung liegt daher die Aufgabe zugrunde, ein Verfahren der eingangs genannten Art zu schaffen, welches einerseits eine für die wirtschaftliche Anzucht entscheidende dichte Packung der Pflanzstumpen während des Vortreibens gestattet, ohne daß sich dabei die Pflanzenwurzeln in einer das Auspflanzen beoder verhindernden Weise verfilzen können, andererseits das Wurzelwachstum und die Entwicklung der Pflanzen im Anzuchtstadium nicht beeinträchtigt.

Vorstehende Aufgabe wird erfindungsgemäß dadurch gelöst, daß die Pflanzstumpen in Reihe in eine foliernartige, für die Pflanzenwurzeln undurchdringliche Beilage eingebracht werden, welche die Pflanzstumpenreihe unten umfaßt, und daß die Beilage vor dem Auspflanzen entfernt wird.

Durch die Erfindung wird erreicht, daß zwar eine Wurzelverfilzung zwischen aneinander anliegenden Stumpenreihen bzw. Reihenabschnitten wirksam verhindert ist, nicht jedoch das Wurzelwachstum überhaupt, denn die Wurzeln können sich noch in der rinnenförmigen Beilage in Längsrichtung der Reihe ausbreiten. Die Verbindung der Stumpen bzw. Pflanzen in der Reihe hintereinander schadet nicht, da die Pflanzen beim Vereinzeln ohnehin in dieser Reihenfolge erfaßt und beim Auspflanzen in die Erde gesetzt werden.

Zur Durchführung des erfindungsgemäßen Verfahrens wird ein Pflanzstumpenpaket, bestehend aus in Reihe angeordneten, aus Erde oder einem Wachstum ermöglichenden Substrat mit eingebetteten Samenkörnern gebildeten Pflanzstumpen vorgeschlagen, bei welchem die Pflanzstumpenreihe von einer folienartigen, für die Pflanzenwurzeln undurchdringlichen Beilage unten umfaßt ist.

Die Erfindung gestattet es, eine ausreichende Bevorratung vorgefertigter und zu Paketen zusammengefaßter Pflanzstumpen durchzuführen. Um ein vorzeitiges Keimen der Pflanzen zu verhindern, werden die Pflanzstumpen während der Lagerzeit trokken gehalten und erst zwecks Einleitung der Keimung befeuchtet. Dadurch ist eine ganzjährige Produktion großer Mengen von Pflanzstumpen für verschiedene Pflanzenarten mit demselben Maschinenbestand gewährleistet. Das neue Verfahren ist besonders geeignet, um in Ländern mit relativ ungünstigen Klimabedingungen, wie beispielsweise Deutschland, insbesondere tropische Kulturpflanzen, wie z. B. Mais oder Soja, zur Reife zu bringen, und zwar vor allem Pflanzen mit sproßbürtigen Wurzeln.

In bevorzugter Ausführung der Erfindung sind die einzelnen Pflanzstumpen von einer von den Pflanzenwurzeln durchdringbaren, sich im Erdreich auflösenden Hülle umgeben. Die Hülle kann aber auch mit Durchlässen, Schlitzen oder dergleichen für einen möglichen Durchtritt der Pflanzenwurzeln versehen oder aus einem Netz gebildet sein.

Die Erfindung wird nachstehend anhand der Zeichnung näher erläutert. Es zeigen:

Figuren 1 und 2 einen Teil einer jeweils unten von einer Beilage umfaßten Pflanzstumpenreihe eines Pflanzstumpenpakets;

Figuren 3 und 4 schematische Darstellungen von Pflanzstumpenpaketen in Draufsicht.

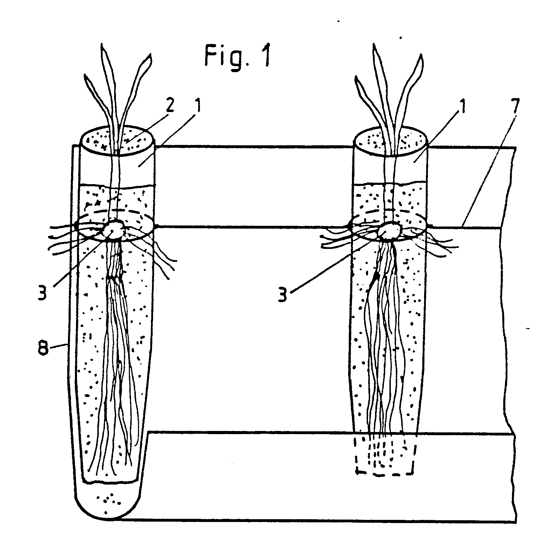

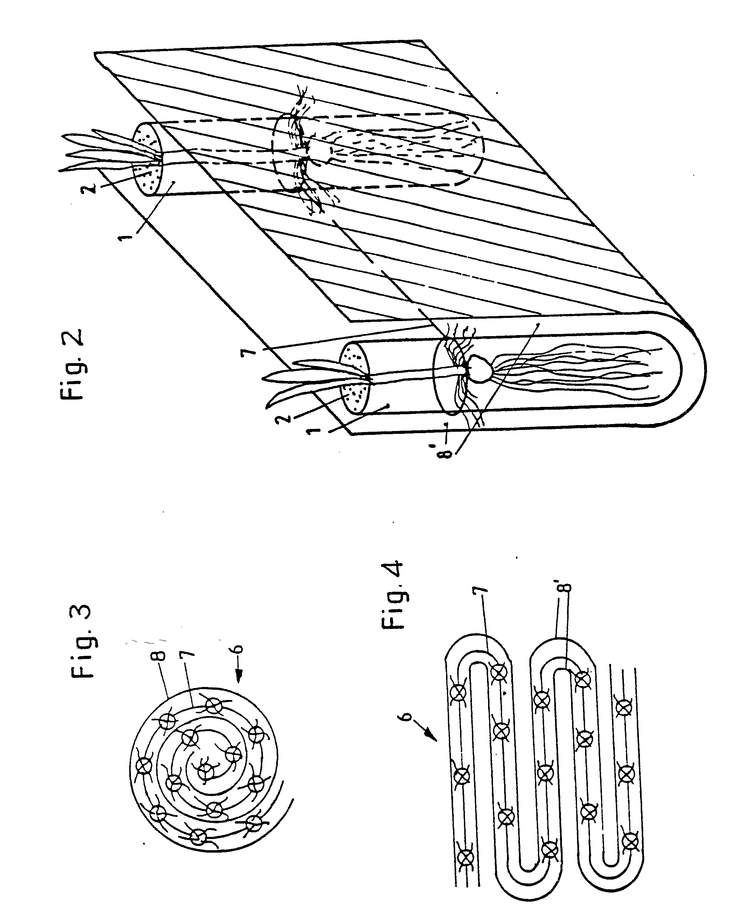

Gemäß Fig. 1 und 2 bestehen die Pflanzstumpen aus einer äußeren Hülle 1 aus einem Material wie Papier, Kunststoffolie oder dergleichen, welches sich nach einer gewissen Zeit im Erdreich auflöst bzw. platzt, wenn sich der Pflanzenkeimling weiter entwickelt. Dieser Vorgang kann dadurch gefördert werden, daß die Hülle 1 zumindest im Wurzelbereich mit Durchbrechungen, Schlitzen oder dergleichen versehen wird oder als Netz ausgebildet ist. Die Hülle 1 ist mit Erde, Torf oder einem das Wachstum ermöglichenden oder auch fördernden Substrat 2 gefüllt, in das etwa in mittlerer Höhe das Samenkorn 3 eingebettet ist. Jede Pflanzstumpe hat auf diese Weise annähernd die Gestalt einer an den Enden offenen Zigarre.

Nach der Herstellung werden die Pflanzstumpen zu Paketen zusammengefaßt, wie dies die Figuren 3 und 4 erkennen lassen. Die einzelnen Pflanzstumpen liegen dabei dicht aneinander. Auf diese Weise läßt sich das gesamte Paket aufrecht stehend in einem Treib- oder Gewächshaus aufstellen. Alle Pflegearbeiten lassen sich leicht durchführen, so daß sich das jeweilige Samenkorn 3 bei entsprechend bemessener Aufenthaltszeit im Gewächshaus zu einer Pflanze entwickelt, wie dies in Fig. 1 und 2 dargestellt ist. Nach genügend langer Entwicklungszeit kann das gesamte Pflanzenpaket 6 aus dem Gewächshaus entnommen und auf dem Feld ausgepflanzt werden. Zweckmäßig sind dabei die einzelnen Pflanzpackungen durch ein Band oder einen Faden 7 untereinander verbunden, der sich ebenfalls später im Erdreich auflöst und den Pflanzabstand der Stecklinge festlegt.

Die Pflanzen gemäß Fig. 1 und 2 bilden außer den nach unten wachsenden Hauptwurzeln sproßbürtige bzw. Kronenwurzeln aus, die das Hüllmaterial 1 während des Keimens nach den Seiten hin durchdringen. Hierauf muß bei der Bildung der Pflanzenpakete bereits Rücksicht genommen werden, indem zwischen die einzelnen Pflanzstumpen Beilagen 8 bzw. 8' eingebracht werden, die aus sich nicht auflösendem Material, beispielsweise Kunststoffolie bestehen und beim Auspflanzen der Pflanzstumpen wieder entfernt werden. Sie können zu gegebener Zeit wieder verwendet werden.

In den Figuren 3 und 4 sind unterschiedlich gepackte Pflanzstumpenpakete wiedergegeben. Bei der Ausführungsform nach Fig. 3 reicht es aus, eine einseitige Beilage 8 entsprechend Fig. 1 zu verwenden, welche die unteren Enden der Pflanzstumpen umfaßt. Bei der Ausführungsform des Stumpenpakets 6 gemäß Fig. 4 wird eine Beilage 8' gemäß Fig. 2 verwendet, die die im Abstand zueinander durch den Faden 7 gehaltenen Pflanzstumpen bzw. die daraus gebildete Pflanzstumpenreihe beidseitig umschließt.

## Patentansprüche

1. Verfahren zur Anzucht und zum Aussetzen von Pflanzen oder Keimlingen, wobei aus Erde oder einem Wachstum ermöglichenden Substrat Pflanzstumpen mit darin eingebetteten Samenkörnern hergestellt, aufgereiht, zu Paketen oder Gruppen zusammengefaßt im Treib- oder Gewächshaus vorgetrieben und anschließend einzeln ausgepflanzt werden, dadurch gekennzeichnet, daß die Pflanzstumpen in Reihe in eine folienartige, für die Pflanzenwurzeln undurchdringlichen Beilage (8, 8') eingebracht werden, welche die Pflanzstumpenreihe unten umfaßt, und daß die Beilage vor dem Auspflanzen entfernt wird.

2. Pflanzstumpenpaket zur Durchführung des Verfahrens nach Anspruch 1, bestehend aus in Reihe angeordneten, aus Erde oder einem Wachstum ermöglichenden Substrat mit eingebetteten Samenkörnern gebildeten Pflanzstumpen, dadurch gekennzeichnet, daß die Pflanzstumpenreihe von einer folienartigen, für die Pflanzenwurzeln undurchdringlichen Beilage (8, 8') unten umfaßt ist.

3. Pflanzstumpenpaket nach Anspruch 2, dadurch gekennzeichnet, daß die einzelnen Pflanzstumpen von einer von den Pflanzenwurzeln durchdringbaren, sich im Erdreich auflösenden Hülle (1) umgeben sind.

4. Pflanzstumpenpaket nach Anspruch 2 oder 3, dadurch gekennzeichnet, daß die Pflanzstumpen in Reihe in der Beilage (8, 8') im Pflanzabstand angeordnet sind.

5. Pflanzstumpenpaket nach Anspruch 4, dadurch gekennzeichnet, daß die Pflanzstumpen durch ein den Pflanzabstand sicherndes Glied, wie Faden (7), Band (5) od. dgl. untereinander verbunden sind.

## Claims

1. A method for the cultivation and planting out of plants or seedlings, wherein plant holders made of earth or a growth-promoting substrate with seeds embedded therein are arranged in a row, are united to form packs or groups, are brought on in a hothouse or greenhouse and, subsequently, are planted out individually, characterised in that the plant holders are arranged in a row in a film-like enclosure (8, 8') which cannot be penetrated by the plant roots and which encloses the bottom of the row of plant holders, and in that the enclosure is removed prior to planting out.

2. A plant holder pack for carrying out the method according to Claim 1, comprising plant holders arranged in a row, made of earth or a growth-promoting substrate with seeds embedded therein, characterised in that the row of plant holders is enclosed at the bottom by a film-like enclosure (8, 8') which cannot be penetrated by the plant roots.

3. A plant holder pack according to Claim 2, characterised in that the individual plant holders are surrounded by a sheath (1) through which the plant roots can penetrate and which decomposes in earth.

4. A plant holder pack according to Claim 2 or 3, characterised in that the plant holders are arranged in a row in the enclosure (8, 8') at planting spacing.

5. A plant holder pack according to Claim 4, characterised in that the plant holders are joined to one another by a link member, such as a thread (7), tape (5) or the like, which ensures that the plants are spaced apart.

## Revendications

1. Procédé pour la culture et l'exposition de plantes ou de germes, suivant lequel des souches, préparées à partir de graines noyées dans un substrat de terre ou de terreau, et qui se dressent au-dessus de ce substrat, sont préalablement cultivées sous forme de paquets ou de groupes dans une serre, pour être ensuite transplantées individuellement, ce procédé étant caractérisé par le fait que les souches forment une rangée que l'on place dans une enveloppe (8, 8') en forme de feuille en matière non transperçable par les racines des plantes, de manière que cette enveloppe entoure la rangée de souches par en dessous, et que l'on retire cette enveloppe avant la transplantation.

2. Paquet de souches pour la mise en œuvre du procédé de la revendication 1, lequel se compose d'un substrat en terre ou autre matière permettant la croissance, dans lequel on a noyé des graines, caractérisé par le fait que la rangée de souches est entourée par le bas d'une enveloppe (8, 8') en matière non transperçable par les racines des plantes.

3. Paquet de souches selon la revendication 2, caractérisé par le fait que les souches individuelles sont entourées d'un fourreau (1) en matière biodégradable et perméable aux racines des plantes.

4. Paquet de souches selon l'une ou l'autre des revendications 2 ou 3, caractérisé par le fait que les souches des plantes sont disposées en rang, avec l'espacement prévu pour les futures plantes, dans ladite enveloppe (8, 8').

5. Paquet de plantes selon la revendication 4, caractérisé par le fait que les souches sont reliées entre elles par un élément tel que fil (7), bande (5) ou similaire, propre à assurer le maintien des plantes à l'écartement prévu.

Fig. 1

Fig. 2

Fig. 3

Fig. 4